# EUROPEAN PATENT APPLICATION

(11) **EP 4 397 586 A1**
(43) Date of publication of application: **10.07.2024**
(21) Application number: 23382005.9
(22) Date of filing: 04.01.2023
(51) Int. Cl.: B63B 22/00, B63B 35/44

(54) **A MULTIPURPOSE BUOY FOR SUPPORTING A PROJECT OF AN OFFSHORE INFRASTRUCTURE AND THE OFFSHORE INFRASTRUCTURE**

(71) Applicant: Eolos Floating Lidar Solutions, S.L., 08110 Montcada I Reixac (ES)
(72) Inventor: PUIGCORBÉ PUNZANO, Jordi, 08912 BADALONA (ES)
(74) Representative: ZBM Patents - Zea, Barlocci & Markvardsen

(57) **Abstract**

In a first aspect, a multipurpose buoy for supporting a project of an offshore infrastructure and the offshore infrastructure during a plurality of operational stages is provided. The multipurpose buoy comprises an environmental sensor system to measure one or more environmental parameters and a charging station to charge a rechargeable electric system. The multipurpose buoy further comprises a power system, wherein the power system comprises an onboard power source to supply onboard power, and a power connector configured to be connected to an external power source to supply external power. In addition, the multipurpose comprises a controller configured to control the power system, at least based on an operational stage of the plurality of operational stages of the project of the offshore infrastructure and the offshore infrastructure. In a second aspect, a method for supporting a project of an offshore infrastructure and the offshore infrastructure during a plurality of operational stages is provided. In further aspects, a controller, a computer program, and a computer-readable storage medium for performing the method are also provided.

## Description

The present disclosure relates to multipurpose buoys for supporting a project of an offshore infrastructure and the offshore infrastructure during a plurality of operational stages, to methods for supporting a project of an offshore infrastructure and the offshore infrastructure during a plurality of operational stages. The present disclosure also relates to controllers, computer programs, and computer-readable storage media that cause a computer to carry out these methods.

### BACKGROUND

Before installing or constructing an offshore infrastructure in an offshore site, measurements and/or inspections may be required. Examples of offshore infrastructures may be offshore wind farms having a plurality of offshore wind turbines, oil and gas equipment, offshore electrical substations, or underwater power cables. For example, geotechnical analysis and exploratory drilling may generally be required before the construction of oil and gas equipment.

Environmental parameters may be measured for an offshore site before the installation of the offshore infrastructure during relatively long periods of time. Environmental sensor systems may be employed to measure these environmental parameters. The environmental sensors systems may be mounted in floating buoys.

Environmental sensor systems mounted in buoys may thus be employed to measure environmental parameters for a given offshore site during the project planification and development phase of the offshore infrastructure, e.g. an offshore wind farm. For example, meteorology, wind resources, and water characteristics may be obtained from the environmental sensor system mounted in a buoy. Meteorology may include rainfall and temperature at the offshore site. Wind resources may include wind speed, wind direction, and wind turbulence. For example, the environmental sensor system may comprise a LiDAR (light detection and ranging) to measure wind vertical profile. Water characteristics may include sea currents, waves, and water quality.

A buoy may be transported to the offshore site to be analyzed and may autonomously operate to obtain data about environmental parameters. This environmental data acquisition stage may take around 1-2 years. Then, the buoy may be moved to another offshore site to measure environmental parameters for another offshore infrastructure.

The installation of the offshore infrastructure may start a few years after the measurement or environmental data acquisition stage, i.e. a few years after the project of the offshore infrastructure. This installation phase may also take a relatively long time. For example, the installation of an offshore wind farm may take about 1 - 3 years. Once the offshore infrastructure is installed, the offshore infrastructure may operate for more than 20 years. For example, offshore wind farms may produce energy during 25 - 30 years.

To ensure an efficient operation of the offshore infrastructure, inspections and maintenance operations are frequently performed. Unmanned aerial vehicles (UAV) or drones may be used to inspect wind turbines, e.g. wind turbine blades. The unmanned aerial vehicle may take images from the wind turbine and may send these images to a maintenance operator. A manned boat must bring the unmanned aerial vehicle closer to the offshore wind turbine to be inspected. Consequently, inspecting the offshore infrastructure only takes place when the weather conditions allow a manned boat to navigate to the offshore infrastructure.

Accordingly, different equipment must be transported to the offshore site at different stages of the lifecycle of the offshore infrastructure.

The present disclosure provides examples of devices and methods that at least partially resolve some of the aforementioned disadvantages.

### SUMMARY

In a first aspect, a multipurpose buoy for supporting a project of an offshore infrastructure and the offshore infrastructure during a plurality of operational stages is provided. The multipurpose buoy comprises an environmental sensor system to measure one or more environmental parameters and a charging station to charge a rechargeable electric system. In addition, the multipurpose buoy comprises a power system. having an onboard power source to supply onboard power and a power connector configured to be connected to an external power source to supply external power. The multipurpose buoy further comprises a controller configured to control the power system, based on an operational stage of the plurality of operational stages of the project of the offshore infrastructure and the offshore infrastructure.

In this disclosure, a multipurpose buoy shall be understood as a floating buoy that has several purposes or functions. A multipurpose buoy of this disclosure is at least able to perform environmental parameter measurements and to electrically charge rechargeable electric systems, e.g. electric vehicles, in an offshore location.

In this disclosure, supporting a project of an offshore infrastructure and the offshore infrastructure shall be understood as those tasks performed to assist or support the project of an offshore infrastructure and the functioning or operation of the offshore infrastructure, e.g. from the project definition to the operation of the offshore infrastructure. Assisting or supporting activities for the project and the operation of the offshore infrastructure may comprise environmental parameter measurements during the project definition of the offshore infrastructure to determine the site characteristics before the installation of the offshore infrastructure, e.g. wind resources and sea characteristics for an offshore wind farm. Supporting activities may also comprise activities to assist electrical vehicles or maintenance operators involved in maintenance tasks of the offshore infrastructure.

In this disclosure, an operational stage of the project of the offshore infrastructure and the offshore infrastructure refers to the different stages of the lifecycle of an offshore infrastructure, e.g. from the assessment of the offshore site characteristics during the project of the offshore infrastructure to the operation or production stage, when the offshore infrastructure is working. Operational stages may thus extend from the project definition to the dismantling of the offshore infrastructure.

According to this aspect, the multipurpose buoy may be used during different operational stages of the project of the offshore infrastructure and of the offshore infrastructure itself. The multipurpose buoy may thus be used for obtaining environmental parameters, e.g. during an environmental data acquisition stage. The same multipurpose buoy may also be used for powering rechargeable power systems, e.g. during the installation and/or the production stage. Electric vehicles and/or electric tools may be examples of rechargeable power systems. Examples of electric vehicles may be electric boats, e.g. used for transporting maintenance operators to the offshore infrastructure. Further examples of electric vehicles may be unmanned surface vessels (USV), unmanned aerial vehicles (UAV), or unmanned underwater vehicles (UUV).

A single multipurpose buoy may thus be used for supporting the project and the offshore infrastructure during different operational stages along the lifecycle of the offshore infrastructure, e.g. by measuring environmental parameters during the environmental data acquisition stage of the project and by charging unmanned aerial vehicles for performing inspections during a working or production stage of the offshore infrastructure. Logistics may be simplified, and operational costs may be reduced.

The power system of the multipurpose buoy is adapted to power the multipurpose buoy according to the operational stage of the offshore infrastructure and its project. To this end, the power system includes an onboard power source and a power connector to be electrically connected to an external power source, e.g. the power grid of the offshore infrastructure. For example, the power demand when the multipurpose is obtaining environmental parameters to support the environmental data acquisition stage of the offshore infrastructure is relatively low. The onboard power source is able to satisfy the power demand for measuring environmental parameters during the environmental data acquisition stage. Furthermore, external power sources are generally not available during this stage.

However, the power demand for charging a rechargeable electric system, e.g. an electric vehicle, is greater than for obtaining environmental measurements. Power generated by the onboard power source may not be sufficient to charge the rechargeable electric system, e.g. an electric vehicle. An external power source is thus used for charging the rechargeable electric system. A power connection may be established with an existing power grid through the power connector. For example, when the offshore infrastructure is an offshore wind farm, the power connection may be connected to the power grid of the offshore wind farm when producing energy. The power system of the multipurpose buoy may control the power source to be used depending on the operational stage of the project offshore infrastructure and the offshore infrastructure.

As the controller is arranged at the multipurpose buoy, communications between the environmental sensor system or the power system and the controller may be improved. Instability of the communications may thus be minimized.

The controller may thus control the power system at least based on the operational stage of the plurality of operational stages of the project of the offshore infrastructure and the offshore infrastructure. For example, the controller may determine an amount of onboard power to be supplied and an amount of external power to be supplied. For example, during an environmental data acquisition stage of the project of the offshore infrastructure, the controller may select the onboard power source to power the environmental sensor system. For example, when the external power source is connected to the power connector, the controller may determine the percentage of each power source for powering the multipurpose buoy. For example, during the production stage of the offshore infrastructure, the controller may determine to use onboard power for powering the multipurpose buoy when the power demand does not exceed the power generation capability of the onboard power source. Depending on the power demand, a first amount of the power demand may be supplied by the onboard power source and a second amount by the external power source. Energy efficiency may thus be improved.

Examples of offshore infrastructures may be offshore wind farms having a plurality of offshore wind turbines, oil and gas equipment, offshore electrical substations, or underwater power cables. The plurality of operational stages of an offshore wind farm comprises an environmental data acquisition stage, an installation stage, a production stage, and a dismantling stage. The operational stages of the offshore wind farm may thus extend from the project definition to dismantling the offshore wind farm.

The environmental sensor system installed on the multipurpose buoy may comprise a lidar, a sonar, an ocean sensor, a temperature sensor, air density sensor, an infrared sensor and/or a camera.

A lidar is a light detection and ranging that may be used to at least measure wind speed and wind direction. In addition, the lidar may also obtain wind turbulence and air density. In some examples, the lidar is a vertical lidar and/or a scanning lidar. Wind shear may thus be accurately determined. In some examples, the lidar may also be used to obtain data from sea characteristics such as wave height or wave frequency.

Wind characteristics may be used during the environmental data acquisition stage of an offshore wind farm to determine the wind resource before the construction of the offshore wind farm. Wind measurements may also be obtained during the production stage and/or during the installation stage. For example, this data may be used to control the operation of unnamed aerial vehicles that may inspect the offshore wind farm. For example, if an excessive wind speed is detected, the controller may instruct the unmanned aerial vehicle to move toward a landing platform or hub for unnamed aerial vehicles.

A sonar is a sound navigation and ranging that may be used to measure distances or to detect objects on or under the surface of the water. The multipurpose buoy 10 may employ the sonar to obtain information about the seabed and/or the water depth. For example, the sonar may be used during the environmental data acquisition stage to obtain data about the seabed which may be used for designing the offshore wind farm.

An ocean sensor may be used to measure ocean or sea water characteristics. For example, sea current direction, wave height, wave direction, wavelength, and sea level may be measured with an ocean sensor. The ocean sensor may be employed to acquire data about the wave height and wave direction during the environmental data acquisition stage of an offshore wind farm. In addition, the ocean sensor may also be used in other stages of the offshore wind farm. For example, wave height and wave direction may be used during the installation and the dismantling stage to inform boats, e.g. manned boats or unmanned about sea conditions. Movement of boats with high wave height may thus be prevented. The ocean sensor may also be employed for maintenance purposes during the production stage or phase of the offshore wind farm.

In some examples, the ocean sensor also comprises a salinity sensor. In some examples, the ocean sensor may comprise a water quality sensor. The water quality sensor may sense the quality of the water, for example, the measurement of its pH, conductivity, or the amount of microplastics, other particles or fluids in the water. The integration of an ocean sensor with a meteorological sensor may be called a met-ocean sensor.

In some examples, the temperature sensor and/or the air density sensor is a dedicated sensor. In other examples, these sensors are integrated into a met-ocean sensor or in a meteorological station. In some examples, the environmental sensor system comprises a plurality of temperature sensors, e.g. an air temperature sensor and a water temperature sensor.

A camera, e.g. a video camera may obtain images or videos of the offshore infrastructure. In addition, the camera may provide information about air visibility. For example, the camera may be used to support vehicles involved during the installation stage or the dismantling stage of an offshore wind farm. Furthermore, the camera may be used during the production stage of the offshore wind farm. For example, unmanned aerial vehicles may be instructed not to inspect an offshore wind turbine if the air visibility is below a predetermined threshold.

As explained above, the environmental sensor system is configured to measure one or more environmental parameters. Examples of these environmental parameters are thus wind speed, wind direction, wind turbulence, air density, visibility, temperature, sea current speed, sea current direction, wave height, wave direction, wavelength, sea salinity, water quality, and sea level.

In a further aspect, a method for supporting a project of an offshore infrastructure and the offshore infrastructure during a plurality of operational stages is provided. The plurality of operational stages comprises at least an environmental data acquisition stage and a production stage. The plurality of operational stages may further comprise an installation stage and a dismantling stage.

The method comprises instructing an onboard power source of a multipurpose buoy to power an environmental sensor system of the multipurpose buoy during the environmental data acquisition stage and obtaining one or more environmental parameters from the environmental sensor system during the environmental data acquisition stage. Furthermore, the method comprises instructing an external power source to power a charging station of the multipurpose buoy during the production stage and instructing the charging station to charge a rechargeable electric system during the production stage.

The multipurpose buoy according to any of the examples herein may be employed in carrying out the method for supporting a project of the offshore infrastructure and the offshore infrastructure itself during a plurality of operational stages.

In yet a further aspect, a controller or computing system comprising a processor configured to perform a method according to any of the examples herein is provided.

In yet a further aspect, a computing program comprising instructions, which, when the program is executed by a processor, cause the processor to carry out a method according to any of the examples herein is provided.

Advantages derived from these aspects may be similar to those mentioned regarding the first aspect.

### BRIEF DESCRIPTION OF THE DRAWINGS

Non-limiting examples of the present disclosure will be described in the following, with reference to the appended drawings, in which:
Figure 1 schematically represents a multipurpose buoy according to an example of the present disclosure;
Figure 2 schematically represents a multipurpose buoy supporting a project of an offshore infrastructure during an environmental data acquisition stage according to an example of the present disclosure;
Figure 3 schematically represents a multipurpose buoy supporting an offshore infrastructure during an installation stage according to an example of the present disclosure;
Figure 4 schematically represents a multipurpose buoy supporting an offshore infrastructure during a production stage according to an example of the present disclosure;
Figure 5 schematically represents a block diagram of a method for supporting a project of an offshore infrastructure and the offshore infrastructure during a plurality of operational stages according to an example of the present disclosure; and
Figure 6 represents a controller and a computing program according to an example of the present disclosure.

### DETAILED DESCRIPTION OF EXAMPLES

In these figures the same reference signs have been used to designate matching elements.

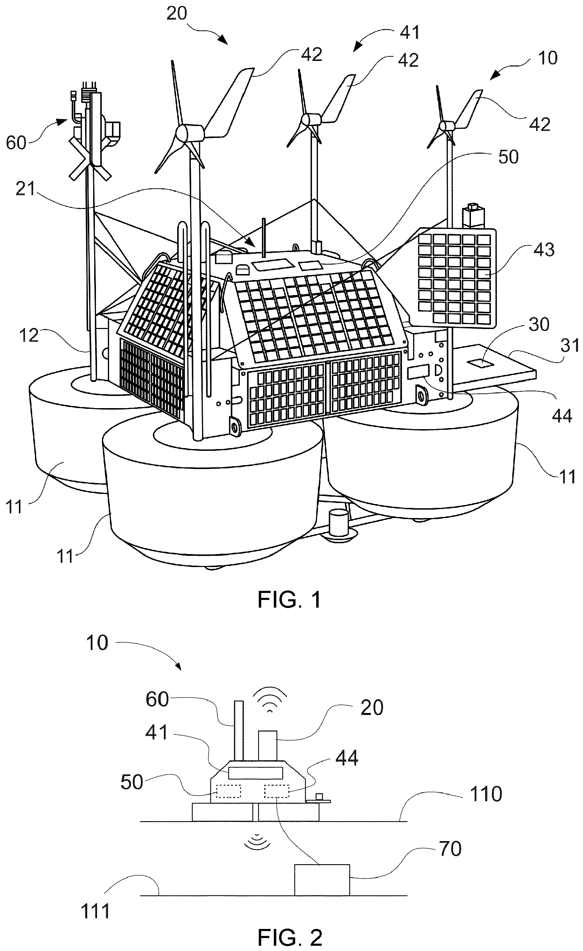

Figure 1 schematically represents a multipurpose buoy 10 according to an example of the present disclosure. The multipurpose buoy 10 of this example comprises a floating system. The floating system of this figure comprises a plurality of floats 11 The floating system provides floatability to the multipurpose buoy 10. The floatability of the multipurpose buoy may be controlled by regulating the amount of water inside the floats 11. In this example, the floats 11 comprise a cylindrical shape. Linking members may be provided to connect the plurality of floats 11.

A support structure 12 is attached to the plurality of floats 11, e.g. at the upper surface of the floats. The support structure 12 of this example comprises four columns and a plurality of side walls extending between two adjacent columns. The plurality of side walls may define an inner chamber. This inner chamber may be at least partially closed by an upper wall and by a lower wall.

The environmental sensor system 20 of this example comprises a lidar 21. The lidar 21 of this figure is a vertical lidar capable to obtain wind characteristics at different heights. The lidar 21 of this example is mounted inside the inner chamber of the support structure. An aperture is provided on the upper wall of the support structure 12 for directing the laser of the lidar 21. Other types of environmental sensors may be mounted outside the inner chamber, e.g. on the outer surface of the side walls, on the lower wall, or on the columns.

The lidar 21 may measure wind speeds, wind turbulences, and wind direction. In some examples, the lidar 21 also measures air density. In further examples, air density may be obtained from an air density sensor, e.g. barometer. In some examples, the environmental sensor system 20 comprises an ocean sensor, a camera, a sonar, a temperature sensor, and an infrared sensor. The environmental sensor system 20 may comprise a plurality of sensors to measure different environmental parameters.

For example, the environmental sensor system 20 of a multipurpose buoy for an offshore wind turbine may comprise at least a lidar, an ocean sensor, an air density sensor, and a camera. This environmental sensor system 20 may thus obtain wind speed, wind turbulence, wind direction, air density, visibility, sea current direction, wave height, wave direction, and wavelength.

These environmental parameters or some of these environmental parameters may be obtained at different stages of the offshore wind farm, e.g. from the environmental data acquisition stage to the production stage the environmental data acquisition stage of an offshore wind farm.

The multipurpose buoy 10 of this example further comprises a charging station 30 to charge a rechargeable electric system, e.g an electric vehicle. The charging station 30 is configured to charge an electric vehicle. For example, the charging station 30 may charge electric vehicles, e.g. manned boats or unmanned surface vessels (USV), unmanned aerial vehicles (UAV), or unmanned underwater vehicles (UUV). The rechargeable electric systems, e.g. electric vehicles, comprise an onboard battery. The onboard batteries of the rechargeable electric system may be charged by the charging station 30 via conduction or induction. The rechargeable electrical system, e.g. electrical vehicle, may be firstly positioned close to the charging station 30 and then the rechargeable electric vehicle may be electrically coupled through a wired connection or through a wireless connection. Guiding and/or robotic systems may be used to guide the movement of an electric connector of the rechargeable electric system to the charging station 30. Induction charging may facilitate the electrical coupling between the charging station 30 and the rechargeable electric system, e.g the electric vehicle.

In some examples, the multipurpose buoy 10 comprises a carrying area. The carrying area may comprise a landing platform for unmanned aerial vehicles to land and take off. In this example, the charging station 30 is arranged on a landing platform 31. The landing platform 31 is configured to carry unmanned aerial vehicles. Furthermore, an electric boat may be docked on the landing platform 31. The unmanned aerial vehicles may be supported by the landing platform 31 while being charged by the charging station 30. The landing platform 31 may comprise elements, e.g. guiding marks or signals, to ease the landing or taking off of the unmanned aerial vehicle. The landing platform 31 may be arranged outside the inner chamber. In this example, the landing platform 31 outwardly extends from a side wall. In other examples, the landing platform 31 may be arranged at the upper wall of the support structure 12.

In some examples, the carrying area may be configured to carry a boat or an unmanned underwater vehicle. For example, for carrying an unmanned underwater vehicle, the carrying area may be an area arranged within the floats 11 or at the lower wall of the support structure 12. A gate may be arranged at the floats 11 or at the lower wall to allow the unmanned underwater vehicle to leave the multipurpose buoy.

The multipurpose buoy 10 comprises a power system for powering the multipurpose buoy. The power system may thus power the controller 50, the environmental power system 20 and the charging station 30. The multipurpose buoy 10 comprises an onboard power source 41 to generate and supply onboard power and a power connector 44 to be connected to an external power source.

The onboard power source 41 may be configured to power the environmental sensor system 20. In some examples, the onboard power source 41 may also power the controller 50. The environmental sensor system 20 and the controller 50 may thus be autonomously powered. In some examples, the onboard power source comprises an installed power capacity of 50W - 1.000W. The onboard power source 41 may also comprise an onboard energy storage system to store the onboard power. The onboard power source 41 capability may thus be greater than the real-time power consumption of the environmental sensor system 20.

The onboard power source 41 may comprise at least one of photovoltaic modules, onboard wind turbines, and a fuel cell. The onboard power source 41 of this figure comprises a plurality of photovoltaic modules 43, a plurality of onboard wind turbines 42, and a fuel cell. The photovoltaic modules 43 are arranged on the side walls of the support structure 12. The onboard power source 41 of this example further comprises three onboard wind turbines 42. The onboard wind turbines 42 are connected at the upper end of three of the columns. In this disclosure, onboard wind turbines should be understood as wind turbines configured to produce less than 1000 W, e.g. between 25 W and 250 W.

As previously described, the power system also comprises a power connector 44. An external power source may be electrically connected to this power connector 44. The external power source may be suitable for providing power for charging a rechargeable electric system, an electric vehicle and/or an electric tool. The power connector 44 may be connected to a power grid connected to the offshore infrastructure. In further examples, the power connector 44 may be connected to an auxiliary electrical network that supplies energy to auxiliary and/or safety systems of an offshore infrastructure, e.g. an offshore wind farm. In further examples, an external pack of batteries may also be used as an external power source.

In some examples, the power connector 44 may be connected to an electrical network of an offshore wind farm, e.g. when the offshore wind farm is in the production stage. The electrical network of an offshore wind farm comprises the power grid to deliver energy to an onshore site and an auxiliary electrical network to power auxiliary components of the wind turbines. The external power supplied by the electrical network of the offshore wind farm may be configured to at least power the charging station.

In some examples, the power system comprises a power converter to convert alternating current (AC) to direct current (DC), or *vice versa.* For example, the power converter may convert alternating current from a power grid or an auxiliary electrical network to direct current for powering the charging station 30.

In some examples, the power system comprises a transformer to reduce the voltage provided by the external power source to a suitable voltage to be used by the multipurpose buoy 10. The transformer may be an AC or a DC transformer. For example, the transformer may reduce the voltage of the power grid, AC or DC, to a suitable voltage.

In some examples, the power system comprises a power selector to select either the onboard power source or the external power source to power the multipurpose buoy, i.e. to power the environmental sensor system and the charging station. For example, when an external power source is connected to the power connector 44, the power selector may select the power source to be employed. The controller 50 may instruct the power selector to select one of the power sources.

The multipurpose buoy 10 of figure 1 comprises a controller 50 arranged at the support structure 12. Communications between the environmental sensor system 20 and the controller 50 may thus be easily established. For example, the environmental sensor system 20 may be wiredly connected to the controller 50.

The controller 50 is configured to control the power system to power the multipurpose buoy 10, at least based on the operational stage of the project of the offshore infrastructure and the offshore infrastructure itself. The availability of power may vary along the operational stages of the offshore infrastructure and its project. For example, when no external power source is connected to the power connector, the multipurpose buoy 10 may only be powered by the onboard power source. For example, the controller may adopt a conservative strategy to maintain a minimum energy quantity stored in the onboard energy storage system. When an external energy source is available, this external energy source may be stored in the onboard energy storage system.

In some examples, the controller 50 may comprise to determine an amount of onboard power to be supplied and an amount of external power to be supplied. In some examples, this amount may be based on power availability.

In some examples, the controller 50 may be configured to obtain the operational stage of the plurality of operational stages of the offshore infrastructure and its project. For example, the controller may receive an indication, from an external computer system, about the operational stage of the project and the offshore infrastructure.

The operational stages may comprise several states. Examples of these states for a production stage of an offshore wind farm may be a full power state or a partial power state. In a full power state, the offshore wind turbines are generating energy at their nominal power capacity. In a partial power state, the offshore wind turbines are generating less power than the nominal power. Further examples of states during the production stage of the offshore wind farm may be a full maintenance state or a partial maintenance state. In the full maintenance state, the wind farm is not generating energy and in the partial maintenance state some offshore wind turbines are generating energy, and others are stopped.

The controller 50 may further be configured to obtain the state of the operational stages. The power source may also be controlled taking into account the obtained state.

The controller 50 may be configured to determine a power demand of the multipurpose buoy 10, at least based on the operational stage of the offshore infrastructure. The controller may also take into account the specific state of the operational stage. Determining a power demand in advance may improve the management of the energy stored by the onboard energy storage system.

In some examples, the multipurpose buoy 10 also comprises a stabilization system.

The stabilization system stabilizes the multipurpose buoy 10 to counteract the effect of the waves. The stabilization system may maintain the multipurpose buoy substantially horizontal. Lidar measurements may thus be more precisely obtained. In addition, landing and taking off operations of unmanned aerial vehicles from the landing platform may be improved. In some examples, the stabilization system may control the amount of water in each of the floats 11 so as to regulate the inclination of the multipurpose buoy 10.

Figure 2 schematically represents a multipurpose buoy supporting a project of an offshore infrastructure during an environmental data acquisition stage according to an example of the present disclosure. Data obtained during this operational stage may be used for the project definition of the offshore infrastructure.

In this figure, the multipurpose buoy 10 is located at an offshore site to obtain wind data and water data from the environmental sensor system 20. The environmental sensor system 20 comprises a lidar to obtain wind characteristics at different heights. The environmental sensor system 20 of this example further comprises an ocean sensor to measure sea water characteristics. In figure 2, the environmental sensor system 20 further comprises a sonar to scan the seabed 111. The seabed 111 may thus be scanned from the sea level 110.

Data obtained from the environmental sensor system 20 may be used for optimizing the design of wind turbines for this specific offshore site. Development and planning of the construction of the offshore wind farm may thus take into account this data. The design of the wind turbines may thus be adapted to the specific conditions of this offshore site. For example, control strategies may be defined to increase the energy captured from the wind while preserving the structural stability of the wind turbines.

The onboard power source 41 of this example is capable of powering the environmental sensor system 20 and the controller 50. The onboard power source 41 comprises several power generation devices to autonomously power the multipurpose buoy 10. The multipurpose buoy 10 is thus autonomous during the data acquisition stage, i.e. during the project phase of the offshore infrastructure.

In some examples, the controller 50 may transmit data to an onshore computing system. In some examples, a storage medium may be provided to store data obtained from the environmental sensor system 20. The controller 50 may perform operations on this stored data.

The multipurpose buoy 10 may be pulled out by a boat from a harbor to the offshore site. The multipurpose buoy 10 may thus be positioned or transported at the predetermined offshore site during the environmental data acquisition stage, i.e. during the project of the offshore infrastructure.

In this example, the multipurpose buoy 10 comprises a communication antenna 60 to create a communication access point to a wireless network. The multipurpose buoy 10 of this example further comprises an external energy storage system 70 connected to the power connector 44.

The controller 50 may manage the power system according to the operation stage. In this example, the controller 50 may determine to use the onboard power source 41 to power the multipurpose buoy 10. Although the external energy storage system 70 is connected to the power connector 44, the controller may determine to use the energy of the external energy storage system 70 in subsequent operational stages, e.g. during the installation stage.

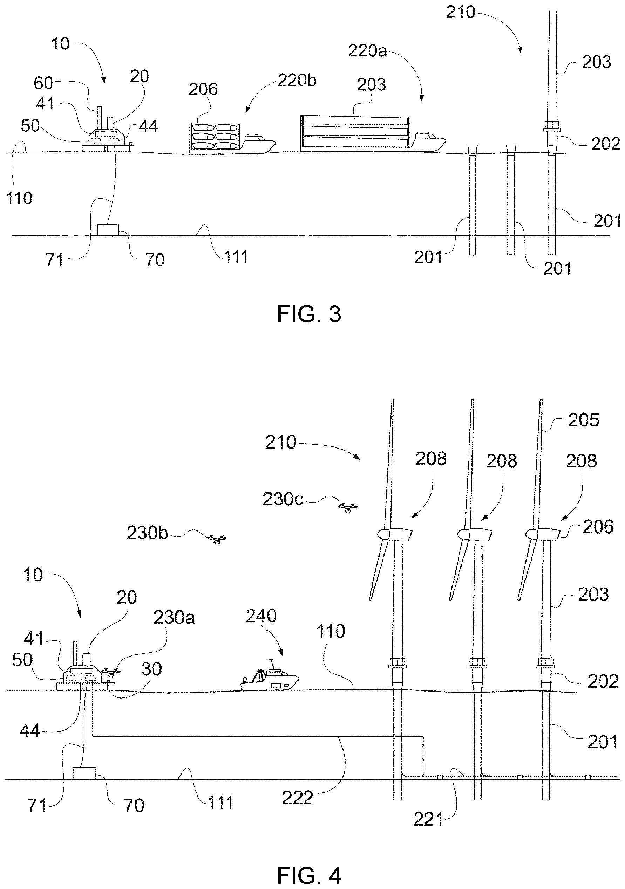

Figure 3 schematically represents a multipurpose buoy supporting an offshore infrastructure during an installation stage according to an example of the present disclosure. In this figure, the offshore infrastructure is an offshore wind turbine. The multipurpose buoy may also be used for assisting in other types of offshore infrastructures.

Several vehicles may be involved during the installation stage of an offshore infrastructure. These vehicles may transport components of the offshore infrastructure to be assembled at the offshore site and may collaborate in the construction of the offshore infrastructure. Installation operators may also be transported by these vehicles. Therefore, a great number of vehicles may be at the offshore site.

For example, during the installation stage of an offshore wind farm 210, geotechnical analysis may be performed with specific vehicles. Heavy vessels may then be used to install the foundation 201 of the offshore wind turbines. The foundations 201 of the offshore wind turbines may be fixed or floating. Monopiles and jackets are examples of fixed foundations. A monopile or a single pile is a long cylindrical tube driven into the seabed 111. Pile drillers and/or pile hammers transported by heavy vessels may be used to anchor the pile into the seabed. Jackets are truss-like lattice structures of steel profiles. The jackets may be transported to the offshore site by heavy vessels in a pre-assembled configuration. Heavy cranes may be required to position and anchor the pre-assembled jacket into the seabed 111. In floating foundations, a floating structure supporting the wind turbine is anchored to the seabed through a plurality of cables. This floating structure is generally assembled in an onshore location and pulled out by boats to the offshore site. Spar-buoy or tension-leg platform foundations are examples of floating foundations.

A transition piece 202 is generally connected to the foundation 201 and raises above the sea level 110. An offshore wind turbine is mounted on the transition piece 202. In some examples, the entire offshore wind turbine is transported by heavy vessels and then assembled with the transition piece 202. In other examples, boats or vessels transport the components of the offshore wind turbine 208 and then these components are assembled at the offshore site. For example, a vessel may transport a tower 203 or several tower sections that may be connected one on top of the other to form the wind turbine tower 203.

In this example, a vessel 220a transports a plurality of towers 203. These towers 203 may be mounted on top of the foundations. Another vessel 220b transports a plurality of nacelles 206 to be mounted at the top of the wind turbine tower 203. A further vessel may transport a plurality of blades to be rotatably connected to the nacelle 206. Further boats or underwater vessels may additionally be used during the installation stage.

These different installation tasks may be performed in parallel. For example, foundations 201 may be formed in one zone of the offshore wind farm 210 and towers 203 may be assembled in another zone. Different installation companies may be involved in these installation tasks. These installation tasks may also involve a great number of installation operators.

The different vessels or boats involved during the installation stage, generally from different installation companies, may generally be individually connected to a communication satellite. Communications between these different vessels or boats thus involve sending and receiving data to and from the communication satellite. This generally involves some delays in communication.

The multipurpose buoy 10 of this example comprises a communication antenna 60 to create a communication access point of a wireless network. Several vehicles and installation operators may be connected to this wireless network. Communications between the vehicles and the installation operators may thus be improved. Communications to the communication satellite may thus be reduced. The communication antenna 60 may create a communication access point to the internet. The vessels may thus be connected to the internet through the communication antenna 60. In this example, the vessels 220a and 220b are connected to the wireless network created by the communication antenna 60. Communications between the vessels 220a and 220b may thus be simplified.

The power consumption of the communication antenna 60 may be between 2 kW and 20 kW. An external energy storage system 70 is electrically connected to the power connector 44. The external energy storage system 70 is an example of an external power source. The external energy storage system 70 may be configured to power the communication antenna 60. The external energy storage system 70 of this example comprises a rack of underwater batteries The rack of underwater batteries of this example lies on the seabed 111. The external energy storage system 70 is connected to the power connector 44 through a power cable 71. A linking member may also be used to mechanically attach the external energy storage system 70 to the multipurpose buoy 10.

In some examples, the external energy storage system 70 is connected to the multipurpose buoy 10 when transported to the offshore site to perform environmental parameter measurements during the environmental data acquisition stage. In further examples, the external energy storage system 70 may be connected to the power connector 44 when the offshore infrastructure is in the installation stage, i.e. when the multipurpose buoy is at the offshore site.

During the installation stage, the environmental sensor system 20 may measure environmental parameters. This data from the environmental sensor system 20 may be employed for managing the traffic of vehicles involved in the installation stage. For example, when excessive wave heights are detected, the controller 50 may send a warning signal to vehicles, e.g to vessels 220a and 220b, in or around the offshore wind farm 210 under construction.

The controller 50 may determine the amount of onboard power and the amount of external power to be supplied from the external energy storage system 70, e.g. depending on the charge status of the external energy storage system 70 and on the status of the onboard power source 41. The controller 50 may also obtain in real-time the power demand of the multipurpose buoy 10. The amount of each of the power sources may also be determined based on this power demand. In this decision, the controller 50 may also take into account that the offshore infrastructure is in the installation stage. The forecasted time of the offshore installation and the forecasted power consumption of the external energy storage system during the installation stage may be compared with the actual time of the installation of the offshore infrastructure and actual power consumption. This information may be used for managing the power system.

The role of the multipurpose buoy during the installation stage may be similar to the role during a dismantling stage of an offshore infrastructure.

Figure 4 schematically represents a multipurpose buoy supporting an offshore infrastructure during a production stage according to an example of the present disclosure.

The multipurpose buoy 10 of this figure may support inspection and maintenance tasks during the production stage. In this example, the offshore infrastructure is an offshore wind farm 210 having a plurality of offshore wind turbines 208.

The offshore wind turbines 208 comprises a rotor rotatably coupled to a hub of the nacelle 206. The rotor comprises a plurality of blades 205, three blades in this example, outwardly extending from the hub. Wind exercises a pressure against the blades 205, which generates the rotation of the rotor. This rotation is converted into electrical energy through an electrical generator, which is generally arranged at the nacelle 206. The nacelle 206 is supported by the tower 203. The tower 203 is connected to the transition piece 202 arranged above the sea level 110 which is supported by the foundation 201. The foundation 201 anchors the offshore wind turbine 200 to the seabed 111.

The offshore wind turbines 208 generate electricity from the wind. Electricity generated by the offshore wind turbines 208 is conducted by an underwater power cable 221 to an offshore electrical substation. Several offshore wind turbines may be connected to a single offshore electrical substation through underwater power cables or through a single underwater power cable. The underwater power cable 221 substantially lays on the seabed 111. This underwater power cable 221 forms part of the electric network of the offshore wind farm 210.

In this example, a power cable 222 connects the electric network of the offshore wind farm 210 to the power connector 44. A second power cable 71 connects the external energy storage system 70 to the power connector 44. The power system of the multipurpose buoy 10 comprises the onboard power source 41, a first external power source, e.g. supplied through the power cable 222, and a second external power source supplied through the second power cable 71. The controller 50 may determine the amount of power supplied by each of these power sources, e.g. depending on the status of the production stage of the offshore wind farm 210. For example, the external energy storage system 70 may power the multipurpose buoy 10 when no power is available through the electrical network of the offshore wind farm.

In this example, the multipurpose buoy 10 is arranged at a distance from the offshore wind turbines 208. However, in further examples, the multipurpose buoy 10 may comprise a connecting structure to be attached to the offshore infrastructure. For example, the connecting structure may be connected to the transition piece 202 of the offshore wind turbine 208. The multipurpose buoy may thus be fixed to an offshore wind turbine 208.

During the production stage of an offshore wind farm, several electric vehicles and/or electric tools may be used. In this example, an electric boat 240 and the unmanned aerial vehicles 230a, 230b and 230c may perform maintenance and inspection operations. In further examples, unmanned underwater vessels may also be involved during the production stage. These electric vehicles may be charged by the charging station 30. In this example, the charging station is charging the unmanned aerial vehicle 230a.

The unmanned aerial vehicles, commonly known as a drone, may autonomously fly from the multipurpose buoy 10 to the offshore infrastructure. The unmanned aerial vehicles of this example comprise one or more sensors to inspect the offshore infrastructure. The unmanned aerial vehicles of this figure comprise a camera to obtain videos and/or photographs of the offshore infrastructure, e.g. a leading edge of a wind turbine blade of an offshore wind turbine. Alternatively, or in addition, the unmanned vehicle may comprise an ultrasonic sensor, an infrared sensor and/or a sonar.

The controller 50 may manage the charging status a/or the operation status of an electrical vehicle, e.g. unmanned electric vehicles. The controller 50 may be configured to instruct an unmanned vehicle to move toward the charging station 30 for charging the electric vehicle.

In this figure, the controller 50 may receive data from the unmanned aerial vehicles 230a, 230b and 230c. This data may comprise charging status and operation status. In some examples, this data may also comprise data about the inspection of the offshore infrastructure.

Depending on the charging status, the controller 50 may instruct the unmanned electric vehicles, to move towards the charging station. The controller may send to an electric manned vehicle an indication to charge this electric manned vehicle. In some examples, the controller 50 may prioritize the rechargeable electric systems to be charged, e.g. depending on the charging status. A diagnosis of the operation status of the electric vehicle may be performed while the electric vehicle is charged. If a failure is detected, the controller 50 may instruct the unmanned electric vehicle to travel to an electric vehicle hub or to a harbor for repair.

In some examples, the controller 50 is configured to obtain one or more environmental parameters from the environmental sensor system 20; compare at least one of the one or more environmental parameters to a threshold; and determine, based on the comparison, to instruct the unmanned electric vehicle to move to the charging station 30. For example, the controller may determine not to instruct the unmanned electric vehicles to travel to the charging station 30 when wave height and/or wind speed is greater than a threshold. Similarly, the controller 50 may send an indication to electric manned vehicles when the environmental conditions do not allow safely traveling towards the charging station 30. The threshold of the wind speed and/or of the wave height may respectively be the maximum wind speed and the maximum wave height at which an electric vehicle can safely operate Travelling towards the charging station 30 may thus be adapted to the current environmental conditions.

The controller 50 may also be configured to compare at least one of the one or more environmental parameters to a threshold. The controller may determine to inspect the offshore infrastructure, based on the result of this comparison. For example, in the case of an inspection of a wind turbine, the controller may determine not to inspect the wind turbine if the wind speed is higher than a wind speed threshold. For example, if the environmental parameters are severe, the controller may determine not to inspect the offshore infrastructure to prevent damages on the unmanned electric vehicle. Additionally, or alternatively, the controller may compare the visibility to a visibility threshold to determine if the inspection is to be performed. If the visibility is lower than the visibility threshold, the unmanned electric vehicle, e.g. unmanned aerial vehicle, may not be able to obtain images or videos with a sufficient quality. The efficiency of the inspection may thus be increased if the visibility is taken into account.

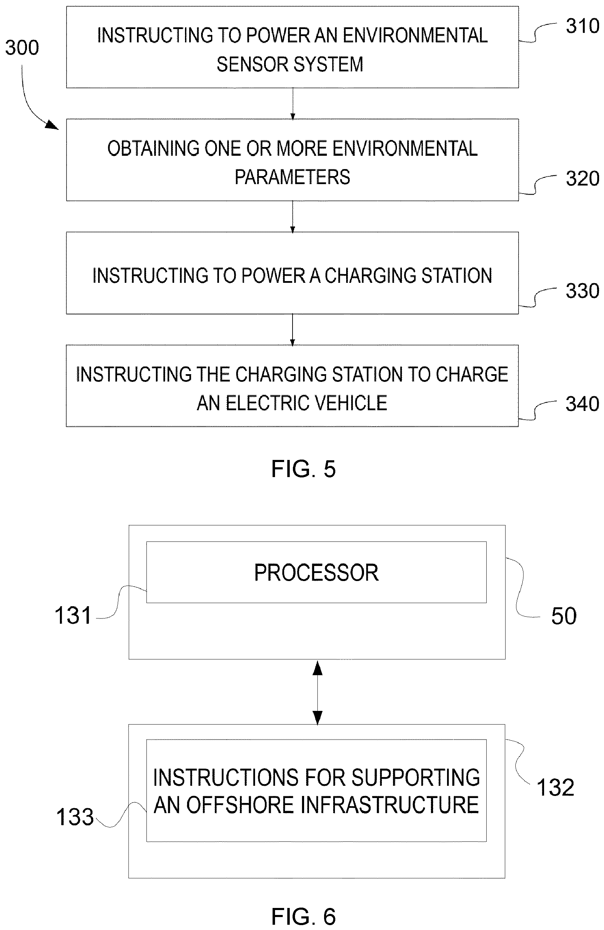

Figure 5 schematically represents a block diagram of a method for supporting a project of an offshore infrastructure and the offshore infrastructure during a plurality of operational stages according to an example of the present disclosure. The offshore infrastructure may be according to any of the examples herein disclosed. The method may be performed by a multipurpose buoy according to any of the examples herein disclosed. The plurality of stages at least comprises an environmental data acquisition stage and a production stage. In some examples, the plurality of stages may comprise an installation stage and/or a dismantling stage.

At block 310, instructing an onboard power source of a multipurpose buoy to power an environmental sensor system of the multipurpose buoy during the environmental data acquisition stage is represented. The onboard power source and the environmental sensor system may be according to any of the herein examples. A controller may control the onboard power source to power the environmental sensor system.

Obtaining one or more environmental parameters from the environmental sensor system during the environmental data acquisition stage is represented at block 320. The one or more environmental parameters may be according to any of the examples herein described, e.g. wind speed. The environmental sensor system of the multipurpose buoy may be suitable to measure the one or more environmental parameters. The controller may receive this data from the environmental parameters. In some examples, this data may be sent by the controller to an onshore computing system. In some examples, this data may be stored in a data storage medium.

At block 330, instructing an external power source to power a charging station of the multipurpose buoy during the production stage. The external power source may be according to any of the herein examples. For example, the external power source may comprise an electric network of the offshore infrastructure and/or an external energy storage system.

The method 300 may further comprise determining the amount of power to be supplied by each of the power sources. For example, the method 300 may comprise determining the amount of power to be delivered for each of the external power sources connected to a power connector of the multipurpose buoy.

In some examples, the method 300 comprises obtaining the operational stage of the offshore infrastructure. For example, the controller may receive an indication of the operational stage. The method may further comprise obtaining the status of the operational stage. The controller may control the power system based on the operational stage.

The method 300 may further comprise determining a power demand of the multipurpose buoy at least based on the operational stage of the offshore infrastructure. An expected power demand may be received from a storage medium for a given operational stage. In further examples, the controller may receive an indication about the power production of an offshore wind farm.

Instructing the charging station to charge a rechargeable electric system, e.g. an electric vehicle, during the production stage is represented at block 340. The charging station may be according to any of the examples herein. The controller may thus instruct the charging station to charge the rechargeable electric system.

In some examples, the method 300 comprises instructing an unmanned electric vehicle to move toward the charging station. In other examples, the controller may send an indication to a manned electric vehicle to move toward the charging station. In these examples, the method 300 comprises instructing the charging station to charge the unmanned or manned electric vehicle. The method 300 may further comprise obtaining one or more environmental parameters from the environmental sensor system and comparing at least one of the one or more environmental parameters to a threshold. Then, the method may comprise determining, based on the comparison, to instruct the unmanned electric vehicle or to send an indication to the manned electric vehicle to move to the charging station.

In some examples, the method 300 comprises receiving data about a charging status and/or operation status of an unmanned electric vehicle and/or of a manned electric vehicle. The controller may then prioritize the electric vehicles to be charged. The method may further comprise performing a diagnosis of the operation status. Depending on the result of this diagnosis, the controller may indicate to repair the electric vehicles.

As explained below, the plurality of operational stages may further comprise an installation stage. In these examples, the method 300 may comprise instructing the external power source to power a communication antenna of the multipurpose during the installation stage; and instructing the communication antenna to create a communication access point of a wireless network. Several vehicles may be connected to this wireless network to improve communication between these vehicles. The external power source may be an external energy storage system having a rack of underwater batteries.

The external energy storage system may be coupled with the multipurpose buoy before being towed to the predetermined offshore site during the environmental data acquisition stage. In other examples, the external energy storage system may be coupled with the multipurpose buoy during the installation stage.

The method may comprise connecting an external power source during the production stage. Since an electric network of the offshore infrastructure is available during the production stage, the multipurpose buoy may be electrically coupled with the electric network of the offshore infrastructure.

In some examples, the method may further comprise attaching the multipurpose buoy to the offshore infrastructure. A connection structure may be provided to attach the multipurpose buoy to e.g. a transition piece of an offshore wind turbine.

During the production stage, the method 300 may further comprise obtaining one or more environmental parameters from the environmental sensor system and comparing the environmental parameters to a threshold. The method further comprises, determining, based on the comparison, to inspect the offshore infrastructure with an unmanned electric vehicle. The decision to inspect the offshore infrastructure thus considers the environmental conditions in real time. An electric vehicle may then travel to the offshore infrastructure to inspect the offshore infrastructure. The method may additionally comprise receiving data about the inspection of the offshore infrastructure from the electric vehicle.

Figure 6 represents a controller and a computing program according to an example of the present disclosure. The controller 50 or computing system comprises a processor 131 that performs operations on data, for example, for supporting an offshore infrastructure. The processor 131 is configured to perform the computer-implemented steps of the method for supporting an offshore infrastructure during a plurality of operational stages. The processor 131 may execute a computer program 132 comprising instructions 133 that cause the processor 131 to support the project of the offshore infrastructure and the offshore infrastructure during a plurality of operational stages. The controller 50 may be a computer, a smartphone, a tablet, or a server.

In some examples, the processor 131 may be a dedicated processor for supporting the offshore infrastructure during different operational parameters. In other examples, the processor 131 may also control inspection operations.

The computer program 132 may be embodied on a storage medium (for example, a CD-ROM, a DVD, a USB drive, a computer memory or a read-only memory) or carried on a carrier signal (for example, on an electrical or optical carrier signal).

The computer program may be in the form of source code, object code, a code intermediate source and object code such as in partially compiled form, or in any other form suitable for use in implementing the methods of supporting the offshore infrastructure according to examples of the present disclosure. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

For reasons of completeness, various aspects of the present disclosure are set out in the following numbered clauses:
Clause 1: A multipurpose buoy for supporting a project of an offshore infrastructure and the offshore infrastructure during a plurality of operational stages, the multipurpose buoy comprising:
   an environmental sensor system to measure one or more environmental parameters;
   a charging station to charge a rechargeable electric system;
   a power system comprising:
      - an onboard power source to supply onboard power; and
      - a power connector configured to be connected to an external power source to supply external power; and
   a controller configured to control the power system, at least based on an operational stage of the plurality of operational stages of the project of the offshore infrastructure and the offshore infrastructure.
Clause 2: A multipurpose buoy according to clause 1, wherein to control power system based on an operational stage of the plurality of operational stages of the project of the offshore infrastructure and the offshore infrastructure comprises to determine an amount of onboard power to be supplied and an amount of external power to be supplied.
Clause 3: A multipurpose buoy according to clause 2, wherein the power system comprises a power selector to select either the onboard power source or the external power source to power the multipurpose buoy.
Clause 4: A multipurpose buoy according to any of clauses 1 - 3, wherein the controller is further configured to obtain the operational stage of the plurality of operational stages of the project of the offshore infrastructure and the offshore infrastructure.
Clause 5: A multipurpose buoy according to any of clauses 1-4, wherein the controller is further configured to determine a power demand of the multipurpose buoy at least based on the operational stage of the plurality of operational stages.
Clause 6: A multipurpose buoy according to any of clauses 1 - 5, wherein the environmental sensor system comprises a lidar, an ocean sensor, a sonar, a temperature sensor, an air density sensor, an infrared sensor and/or camera. Clause 7: A multipurpose buoy according to any of clauses 1-6, wherein the one or more environmental parameters comprises at least one of: wind speed, wind direction, wind turbulence, air density, visibility, temperature, sea current speed, sea current direction, wave height, wave direction, wavelength, sea salinity, water quality and sea level.
Clause 8: A multipurpose buoy according to any of clauses 1-7, wherein the offshore infrastructure comprises an offshore wind farm and the plurality of operational stages of the project of the offshore infrastructure and the offshore infrastructure comprises: environmental data acquisition stage, installation stage, and production stage; optionally dismantling stage.
Clause 9: A multipurpose buoy according to any of clauses 1 - 8, wherein the onboard power source is configured to power the environmental sensor system.
Clause 10: A multipurpose buoy according to clause 9, wherein the onboard power source is further configured to power the controller.
Clause 11: A multipurpose buoy according to any of clauses 1 - 10, wherein the external power source is configured to power the charging station when connected to the power connector.
Clause 12: A multipurpose buoy according to clause 11, wherein the offshore infrastructure comprises an offshore wind farm and the plurality of operational stages comprises: environmental data acquisition stage, installation stage, and production stage; and wherein the power connector is connected to an electrical network of the offshore wind farm when the offshore infrastructure is in the production stage, and wherein the external power supplied by the electrical network of the offshore wind farm is configured to at least power the charging station.
Clause 13: A multipurpose buoy according to any of clauses 1 - 12, further comprising a communication antenna to create a communication access point of a wireless network, wherein the external power source comprises an external energy storage system; and wherein the external energy storage system is configured to power the communication antenna when the external power source is connected to the power connector.
Clause 14: A multipurpose buoy according to clause 13, wherein the offshore infrastructure comprises an offshore wind farm and the plurality of operational stages comprises environmental data acquisition stage, installation stage, and production stage; and wherein the power connector is connected to the external energy storage system when the offshore infrastructure is in the installation stage.
Clause 15: A multipurpose buoy according to any of clauses 1 - 14, wherein the onboard power source comprises at least one of: photovoltaic modules, onboard wind turbines and a fuel cell.
Clause 16: A multipurpose buoy according to any of clauses 1 - 15, wherein the rechargeable electric system comprises an electric vehicle, optionally an unmanned electric vehicle and/or a manned electric vehicle.
Clause 17: A multipurpose buoy according to any of clauses 1 - 16, wherein the rechargeable electric system comprises an unmanned electric vehicle and wherein the controller is configured to instruct the unmanned electric vehicle to move toward the charging station for charging the unmanned electric vehicle.
Clause 18: A multipurpose buoy according to clause 17, wherein the controller is configured to:
   obtain one or more environmental parameters from the environmental sensor system;
   compare at least one of the one or more environmental parameters to a threshold;
   determine, based on the comparison, to instruct the unmanned electric vehicle to move to the charging station.
Clause 19: A multipurpose buoy according to any of clauses 1 - 16, wherein the rechargeable electric system comprises a manned electric vehicle, and wherein the controller is configured to send an indication to the manned electric vehicle to move toward the charging station for charging the manned electric vehicle.
Clause 20: A multipurpose buoy according to any of clauses 17 - 19, wherein the controller is configured to receive data about a charging status and/or an operation status of the unmanned electric vehicle and/or the manned electric vehicle.
Clause 21: A multipurpose buoy according to clause 20, wherein the controller is configured to prioritize the electric vehicles to be charged.
Clause 22: A multipurpose buoy according to any of clauses 1 - 21, wherein the controller is configured to
   obtain one or more environmental parameters from the environmental sensor system;
   compare the environmental parameters to a threshold; and
   determine, based on the comparison, to inspect the offshore infrastructure with an unmanned electric vehicle.
Clause 23: A multipurpose buoy according to any of clauses 1 - 22 wherein the controller is configured to receive data about an inspection of the offshore infrastructure from the rechargeable electric system.
Clause 24: A multipurpose buoy according to any of clauses 1 - 23, further comprising a connecting structure to be attached to the offshore infrastructure.
Clause 25: A method for supporting a project of an offshore infrastructure and the offshore infrastructure during a plurality of operational stages, the plurality of operational stages comprising at least an environmental data acquisition stage and a production stage, the method comprising:
   instructing an onboard power source of a multipurpose buoy to power an environmental sensor system of the multipurpose buoy during the environmental data acquisition stage;
   obtaining one or more environmental parameters from the environmental sensor system during the environmental data acquisition stage;
   instructing an external power source to power a charging station of the multipurpose buoy during the production stage; and
   instructing the charging station to charge a rechargeable electric system during the production stage.
Clause 26: A method according to clause 25, wherein the plurality of operational stages further comprises an installation stage, and wherein the method further comprises:
   instructing the external power source to power a communication antenna of the multipurpose buoy during the installation stage; and
   instructing the communication antenna to create a communication access point of a wireless network.
Clause 27: A method according to any of clauses 25 - 26, further comprising obtaining the operational stage of the project of the offshore infrastructure and the offshore infrastructure.
Clause 28: A method according to any of clauses 25 - 27, further comprising determining a power demand of the multipurpose buoy at least based on the operational stage of the offshore infrastructure.
Clause 29: A method according to any of clauses 25 - 28, wherein the rechargeable electric system comprises an unmanned electric vehicle, the method comprising:
   instructing the unmanned electric vehicle to move toward the charging station; and
   instructing the charging station to charge the unmanned electric vehicle.
Clause 30: A method according to clause 29, further comprising:
   obtaining one or more environmental parameters from the environmental sensor system;
   comparing at least one of the one or more environmental parameters to a threshold;
   determining, based on the comparison, to instruct the unmanned electric vehicle to move to the charging station.
Clause 31: A method according to any of clauses 25 - 28, wherein the rechargeable electric system comprises a manned electric vehicle, the method comprising:
   sending an indication to the manned electric vehicle to move toward the charging station; and
   instructing the charging station to charge the manned electric vehicle.
Clause 32: A method according to any of clauses 29 - 31, further comprising receiving data about a charging status and/or an operation status of the unmanned electric vehicle and/or the manned electric vehicle.
Clause 33: A method according to clause 32, further comprising prioritizing the electric vehicles to be charged.
Clause 34: A method according to any of clauses 25 - 33, further comprising:
   obtaining one or more environmental parameters from the environmental sensor system;
   comparing the environmental parameters to a threshold; and determining, based on the comparison, to inspect the offshore infrastructure with an unmanned electric vehicle.
Clause 35: A method according to clause 34, further comprising receiving data about an inspection of the offshore infrastructure from the electric vehicle.
Clause 36: A method according to any of clauses 25 - 35, further comprising connecting an external power source to a power connector of the multipurpose buoy during the production stage.
Clause 37: A method according to any of clauses 25 - 36, further comprising positioning the multipurpose buoy at a predetermined offshore site during the environmental data acquisition stage.
Clause 38: A method according to any of claims 25 - 37, further comprises attaching the multipurpose buoy to the offshore infrastructure.
Clause 39: A controller comprising a processor configured to perform a method according to any of clauses 25 - 35.
Clause 40: A computer program comprising instructions which, when the program is executed by a computer, cause the computer to carry out the method according to any of clauses 25 - 35.
Clause 41: A computer-readable storage medium comprising instructions which, when executed by a computer, cause the computer to carry out the method according to any of clauses 25 - 35.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the clauses that follow.

## Claims

1. A multipurpose buoy for supporting a project of an offshore infrastructure and the offshore infrastructure during a plurality of operational stages, the multipurpose buoy comprising:
an environmental sensor system to measure one or more environmental parameters;
a charging station to charge a rechargeable electric system;
a power system comprising:
- an onboard power source to supply onboard power; and
- a power connector configured to be connected to an external power source to supply external power; and
a controller configured to control the power system, at least based on an operational stage of the plurality of operational stages of the project of the offshore infrastructure and the offshore infrastructure.

2. A multipurpose buoy according to claim 1, wherein to control power system based on an operational stage of the plurality of operational stages of the project of the offshore infrastructure and the offshore infrastructure comprises to determine an amount of onboard power to be supplied and an amount of external power to be supplied.

3. A multipurpose buoy according to any of claims 1 - 2, wherein the environmental sensor system comprises a lidar, an ocean sensor, a sonar, a temperature sensor, an air density sensor, an infrared sensor and/or camera.

4. A multipurpose buoy according to any of claims 1-3, wherein the one or more environmental parameters comprises at least one of: wind speed, wind direction, wind turbulence, air density, visibility, temperature, sea current speed, sea current direction, wave height, wave direction, wavelength, sea salinity, water quality and sea level.

5. A multipurpose buoy according to any of claims 1-4, wherein the offshore infrastructure comprises an offshore wind farm and the plurality of operational stages of the project of the offshore infrastructure and the offshore infrastructure comprises: environmental data acquisition stage, installation stage and production stage.

6. A multipurpose buoy according to any of claims 1 - 5, wherein the onboard power source is configured to power the environmental sensor system.

7. A multipurpose buoy according to any of claims 1-6, wherein the external power source is configured to power the charging station when connected to the power connector.

8. A multipurpose buoy according to any of claims 1-7, further comprising a communication antenna to create a communication access point of a wireless network, wherein the external power source comprises an external energy storage system; and wherein the external energy storage system is configured to power the communication antenna when the external energy storage system is connected to the power connector.

9. A multipurpose buoy according to any of claims 1 - 8, wherein the rechargeable electric system comprises an unmanned electric vehicle; and wherein the controller is configured to instruct the unmanned electric vehicle to move toward the charging station for charging the unmanned electric vehicle.

10. A method for supporting a project of an offshore infrastructure and the offshore infrastructure during a plurality of operational stages, the plurality of operational stages comprising at least an environmental data acquisition stage and a production stage, the method comprising:
instructing an onboard power source of a multipurpose buoy to power an environmental sensor system of the multipurpose buoy during the environmental data acquisition stage;
obtaining one or more environmental parameters from the environmental sensor system during the environmental data acquisition stage;
instructing an external power source to power a charging station of the multipurpose buoy during the production stage; and
instructing the charging station to charge a rechargeable electric system during the production stage.

11. A method according to claim 10, wherein the plurality of operational stages further comprises an installation stage, and wherein the method further comprises:
instructing the external power source to power a communication antenna of the multipurpose buoy during the installation stage; and
instructing the communication antenna to create a communication access point of a wireless network.

12. A method according to any of claims 10 - 11, wherein the rechargeable electric system comprises an unmanned electric vehicle, the method comprising:
instructing the unmanned electric vehicle to move toward the charging station; and
instructing the charging station to charge the unmanned electric vehicle.

13. A controller comprising a processor configured to perform a method according to any of claims 10 - 12.

14. A computer program comprising instructions which, when the program is executed by a computer, cause the computer to carry out the method according to any of claims 10 - 12.

15. A computer-readable storage medium comprising instructions which, when executed by a computer, cause the computer to carry out the method according to any of claims 10 - 12.
